# EUROPEAN PATENT APPLICATION

(11) **EP 1 916 608 A1**
(43) Date of publication of application: **30.04.2008**
(21) Application number: 06742147.9
(22) Date of filing: 09.06.2006
(51) Int. Cl.: G06F 17/00

(54) **A METHOD FOR SHARING THE GAME DATA AND THE SYSTEM THEREOF**

(30) Priority: 17.08.2005 CN 200510090543
(71) Applicant: Huawei Technologies Co., Ltd., Longgang District Shenzhen Guangdong 518129 (CN)
(72) Inventor: LIU, Qian, 518129 Shenzhen Guangdong (CN); ZHONG, Jieping, 518129 Shenzhen Guangdong (CN)
(74) Representative: Mounteney, Simon James
(86) International application number: PCT/CN2006/001265
(87) International publication number: WO 2007/019759

(57) **Abstract**

The present invention discloses a method and system for sharing game data, in which after a user of a client stops experiencing a game, the client may send game data to a game data receiving/sending unit of a server through a game data receiving/sending unit of the client after encapsulating the game data to be uploaded by a game data processing unit of the client; the game data receiving/sending unit of the server forwards the game data received to a game data analyzing unit of the server, then the game data analyzing unit of the server sends different categories of game data to different processing units, and the different processing units store the different categories of game data received in corresponding storing units in a game data storing unit of the server. In the method in accordance with the present invention, game data of a client are uploaded to a server, and the server may share the game data with other clients. Therefore, a sense of satisfactory of a game experience of a client user is enhanced.

## Description

### Field of the Technology

The present invention relates to the data sharing technology, and particularly, to' a method and system for sharing game data.

### Background of the Invention

It is well known that fun of an internet game is game competition between a user and rivals of the user. Besides network games, there are many offline games which are convenient for a user to play all the same without thinking of network connection. For example, users may download games to clients such as computers or mobile terminals, and then each plays a game in a client.

The inventor finds in the process of invention, at present, clients may not share offline game data. Therefore, only a user himself may experience a game and achievement while other users may not learn of the game procedure and the achievement. Thus, on the one hand, the experience and achievement of an offline game user is less impressive; on the other hand, other users may not sense an intense challenge, consequently it is difficult to make them interested in the game.

### Summary of the Invention

The present invention provides a method for sharing game data, which makes it possible to share game data of a client to a server so that the game data can be downloaded by other clients.

The present invention also provides a system for sharing game data, which has a simple system structure and is capable of sharing game data of a client to a server so that the game data can be downloaded by other clients.

A method for sharing game data includes:
generating, by a first client, game data, encapsulating the game data, and sending the game data encapsulated to a server after a user of the first client stops experiencing a game;
de-encapsulating, by the server, the game data sent from the first client, separating the game data de-encapsulated according to different categories, and storing the game data separated in the serve so that the game data can be downloaded by a second client.

The method further includes:
storing the game data generated locally and terminating the procedure if a user of the first client does not need to upload the game data after generating the game data and before encapsulating the game data.

The method further includes:
storing the game data generated by the first client locally and terminating the procedure if network connection is abnormal after generating the game data and before encapsulating the game data.

The method further includes:
performing, by the first client, the procedure of encapsulating and sending the game data to a server if the user needs to upload the game data after storing the game data locally.

The method further includes:
choosing, by a user of the first client, the game data to be uploaded through a preset interface in the first client.

The game data stored in the server includes:
at least one of process data, score data, prop data, and money data.

The process of downloading the game data includes:
sending, by the second client, downloading request information to the server;
separating, by the server, the downloading request information sent from the second client according to different categories;
acquiring, by the server, the game data according to the different categories of the downloading request information and sending the game data acquired to the second client; processing, by the second client, the game data sent from the server.

The process of processing the game data sent from the server includes:
reproducing game process according to the process data in the game data sent from the server.

The method further includes:
taking, by a user of the second client, the game process corresponding to the process data in the game data sent from the server as a participant of a local game through a preset interface in the second client.

A system for sharing game data includes: a client and a server, wherein:
the client includes:
   the game logic processing unit provides a game and generates game data after a user of the client stops experiencing a game;
   the game data processing unit sends the game data generated by the game logic processing unit to the game data receiving/sending processing unit of the client after encapsulating the game data generated by the game logic processing unit, or sends the game data generated by the game logic processing unit to the data storing unit of the client;
   the game data receiving/sending unit forwards the game data from the game data processing unit of the client to the game data receiving/sending unit of the server;
   the game data storing unit stores temporarily the game data generated by the game logic processing unit;
   the server includes: a game data receiving/sending unit, a game data analyzing unit, a game data processing unit, and a game data storing unit;
   the game data receiving/sending unit of the server forwards the game data from the game data receiving/sending unit of the client to the game data analyzing unit of the server;
   the game data analyzing unit of the server sends different categories of game data to difference processing modules in the game data processing unit of the server after de-encapsulating and separating the game data from the game data receiving/sending unit of the server according to different categories;
   the game data processing unit of the server, which includes different processing modules for processing different categories of game data, stores the corresponding different categories of game data from the game data analyzing unit of the server in the game data storing unit of the server;
   the game data storing unit of the server stores the game data uploaded by a client.

The different processing modules of the game data processing unit of the server include: at least one of a score data processing module, a prop data processing module, and a money data processing module.

The game data storing unit of the server includes different storing modules for storing different categories of game data;
the different storing modules include: at least one of a process data storing module, a score data storing module, a prop data storing module, and a money data storing module.

The game logic processing unit of the client also receives process data in the game data from the game data processing unit of the client and reproduces game process corresponding to the process data;
the game data processing unit of the client also sends downloading request information for downloading game data stored in the server to the game data analyzing unit of the server through the game data receiving/sending unit of the client and the game data receiving/sending unit of the server, and receives game data from the game data receiving/sending unit of the client;
the game data receiving/sending unit of the client also receives game data from the game data receiving/sending unit of the server and forwards the game data to the game data processing unit of the client;
the game data receiving/sending unit of the server also receives game data from the game data analyzing unit of the server and forwards the game data to the game data receiving/sending unit of the client;
after receiving downloading request information from the game data receiving/sending unit of the server and separating the information, the game data analyzing unit of the server sends different categories of the downloading request information to the different processing modules in the game data processing unit; receives game data from the different processing modules in the game data processing unit and sends the game data to the game data receiving/sending unit of the server after encapsulating the game data;
the different processing modules of the game data processing unit also receive the downloading request information from the game data receiving/sending unit of the server, acquire the game data from the storing unit according to the downloading request information, and then send the game data acquired to the game data analyzing unit of the server.

As can be seen from the above technical solutions, in accordance with embodiments of the present invention, if the network connection between the client and the server is abnormal or the client temporarily decides not to upload the game data after the user of the client stops experiencing a game, the client may store the game data only to the local game data storing unit; if the network connection between the client and the server is normal or a user of the client decides to upload the game data, the game data processing unit of the client encapsulates the game data to be uploaded into data packets and sends the data packets to the game data receiving/sending unit of the server through the game data receiving/sending unit of the client; the game data receiving/sending unit of the server forwards the game data received to the game data analyzing unit of the server, then, after de-encapsulating and separating the game data received, the game data analyzing unit of the server sends different categories of game data to the different processing modules, then the different processing modules store the different categories of game data, such as game process data, score data, game prop data and game money data in corresponding storing modules in the game data storing unit of the server.

As can be seen from the above technical solutions, the user of the client may upload the game data to the server for sharing after stopping experiencing a game, so that second client may download interesting sharing game data from the server through a network. On the one hand, such processing enhances a satisfaction of game experience of the user of the client having uploaded the game data; on the other hand, such processing also makes the user of the client who would download the sharing game data sense an intense challenge, and consequently be interested in the game.

### Brief Description of the Drawings

Figure 1 shows a simplified block diagram of a system for sharing game data in accordance with an embodiment of the present invention.
Figure 2 shows a simplified schematic flowchart for sharing game data in accordance with an embodiment of the present invention.
Figure 3 shows a simplified schematic flowchart for downloading shared game data by a client in accordance with another embodiment of the present invention.

### Embodiments of the Invention

According to an embodiment of the present invention, after a user of a client stops experiencing a game, the client may temporarily store game data locally; or the client encapsulates the game data to be uploaded with a game data processing unit of the client and sends the game data encapsulated by the client to a game data receiving/sending unit of a server via a game data receiving/sending unit of the client; the game data receiving/sending unit of the server forwards the game data encapsulated by the client to a game data analyzing unit of the server, then the game data analyzing unit of the server sends different categories of game data to different processing modules after de-encapsulating and separating the game data encapsulated by the client, and the different processing modules store the different categories of game data received in corresponding storing modules in a game data storing unit of the server. In the method in accordance with an embodiment of the present invention, game data of the client are uploaded to a server, and the server may share the game data with other clients; therefore, satisfaction of game experience of the user of the client may be enhanced.

The present invention is hereinafter further described in detail with reference to the accompanying drawings and preferred embodiments to further clarify the technical solutions and advantages of the present invention.

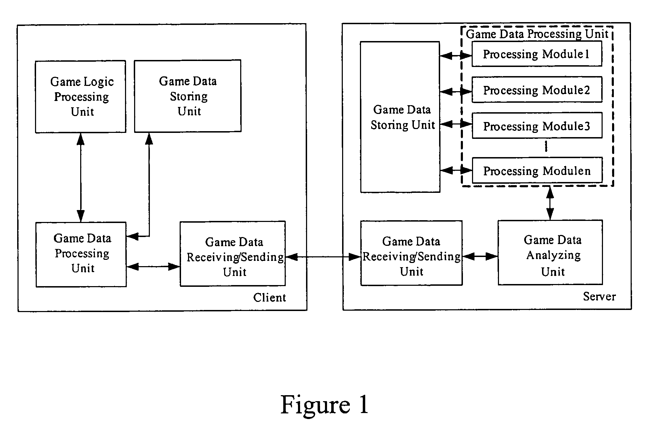

Figure 1 shows a simplified block diagram of a system for sharing game data in accordance with an embodiment of the present invention. As shown in Figure 1, the system includes two parts: a client and a server, wherein the client may upload game data of its own to the server and may also download shared game data provided by other clients in the server; the server mainly administrates the shared game data, for example, the server receives game data uploaded by a client, and stores the game data under categories after analyzing them, or the server receives downloading request information of the other clients, and acquires the shared game data of a category needed from a corresponding storing unit according to the downloading request information and sends the game data of the category to the client. Composing units of a client and a server are hereinafter described specifically.

The client includes four units, that is, a game logic processing unit, a game data processing unit, a game data storing unit and a game data receiving/sending unit.

The game logic processing unit is used for providing a game such as a racing game or a mine sweeping game; specifically, in the one hand, for generating game data, such as score data of a user, prop data acquired in the game by the user, and process data of the whole game after the user of the client stops experiencing a game; on the other hand, for reproducing a game process corresponding to the game data after receiving the process data from the game data processing unit of the client. It is to be noted that generation of game data is determined by a game itself and is independent of the method in accordance with an embodiment of the present invention.

The game data processing unit is used for processing game data, including, when determining that a network connection between the client and the server is normal and a user of the client decides to upload the game data, encapsulating the game data generated by the game logic processing unit into a data packet, and uploading the data packet to the server via the game data receiving/sending unit of the client; or when determining that the network connection between the client and the server is abnormal or when a user of the client decides not to upload the game data, sending the game data generated by the game logic processing unit to the game data storing unit of the client; or sending downloading request information for downloading the shared game data in the server, such as acquiring a score, a prop or a game process in game data, from the game data storing unit in the server to the game data analyzing unit of the server through the game data receiving/sending unit of the client and the game data receiving/sending unit of the server.

The game data receiving/sending unit is used for data communication between the client and the server, that is, forwarding the game data from the game data processing unit of the client to the game data receiving/sending unit of the server; or forwarding the game data from the game data receiving/sending unit of the server to the game data processing unit of the client.

The game data storing unit is used for storing the game data generated by the game logic processing unit temporarily when the game data processing unit of the client detects that the network connection between the client and the server is abnormal. The game data storing unit is important in the case that the client is a mobile terminal. It guarantees that game data, which may not be uploaded by the mobile terminal when there is no network signal, may be stored locally temporarily; then the game data stored in the game data storing unit may be uploaded to the server when the client may access the network.

The game data storing unit of the client may store the game data under categories; for example, score data are stored in a score data storing module, prop data are stored in a prop data storing module and process data are stored in a process data storing module; or may store the game data without classifying the game data.

A server includes four units, that is, a game data analyzing unit, a game data processing unit, a game data receiving/sending unit, and a game data storing unit.

The game data receiving/sending unit is used for data communication between the server and a client, that is, forwarding the game data from the game data analyzing unit of the server to the game data receiving/sending unit of the client; or forwarding the game data from the game data receiving/sending unit of the client to the game data analyzing unit of the server.

The game data analyzing unit is used for analyzing game data. Specifically, on the one hand, the game data analyzing unit sends different categories of the game data to different processing modules of the game data processing unit of the server after encapsulating and analyzing the game data sent from the game data receiving/sending unit of the server; on the other hand, the game data analyzing unit separates downloading request information sent from the game data receiving/sending unit of the server according to different categories and sends the information to the different processing modules of the game data processing unit of the server; then after encapsulating the game data sent from the different processing modules, the game data analyzing unit sends the game data encapsulated to the game data receiving/sending unit of the server.

The game data processing unit is used for forwarding game data. Specifically, different processing modules of the game data processing unit such as processing module 1, processing module 2, ... , processing module n, receive different categories of game data from the game data analyzing unit and store the game data received in corresponding different storing modules; For example, if game data are score data, a score data processing module in the game data processing unit stores the score data in a corresponding score data storing module, and if the game data are prop data, a prop processing module in the game data processing unit stores the prop data in a corresponding prop data storing module. The game data processing unit also receives downloading request information from the game data analyzing unit, then acquires the game data needed from the different categories of storing modules according to the downloading request information and sends the game data acquired to the game data analyzing unit.

In general, according to different categories of game data, the game data processing unit may be divided into different processing modules such as:
a score data processing module used for generating a score list by sorting scores from the highest to the lowest, etc.;
a prop data processing module used for forwarding prop data etc.;
a money data processing module used for purchasing a prop etc.

The processing modules in the game data processing unit of the server are not limited to the three categories of processing modules above and a user may add or delete categories of processing modules according to need.

The game data storing unit is used for storing the game data uploaded by a client, and in general, according to categories of the game data, the game data storing unit may be classified into different storing modules, such as:
a score data storing module used for storing score data and generating a score list by sorting scores from the highest to the lowest;
a prop data storing module used for storing prop data;
a money data storing module used for storing money data, where the money is virtual money in a game and may be used to purchase a prop etc.;
a process storing module used for storing process data of a whole game or process data of a part of a game.

It is to be noted that the storing modules in the game data storing unit of the server are not limited to the four categories of storing modules above and a user may increase or decrease categories of storing modules on demands. For a complex game, other categories of data storing modules may be added; for example, process data in the game data uploaded may be segmented according to different scenarios and stored in different process storing modules; while for a simple game, there may be only one score data storing module, thus, it is implemented by a whole system that a client may save the score data, or there is one process storing module, and other clients may reproduce the whole process of the game by downloading the process data. Furthermore, the game data storing unit of the server may store game data without classifying the game data.

In addition, for the game data which may be transferred, such as props and money, after a client stores the game data in the server, a user of the client may notify another user to acquire above the game data from the server by some means, such as communication or an oral notice.

The composition of the system, as shown in Figure 1, for sharing the game data in accordance with an embodiment of the present invention, implements sharing game data of a client, which enhances satisfaction of game experience of a user of the client. At the same time, the client may also download the shared game data from a server by the system, which provides more game challenges for other users.

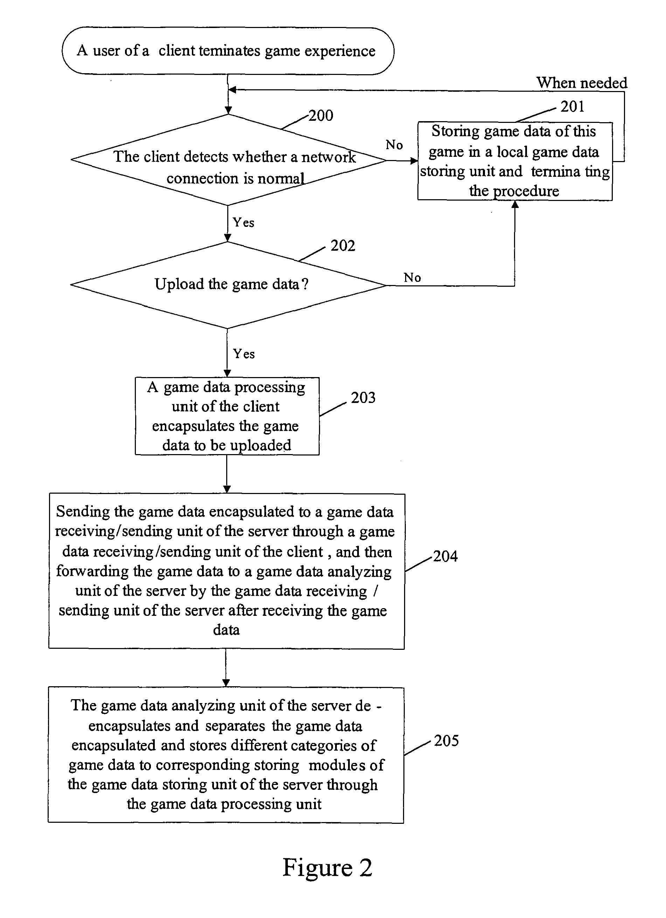

Figure 2 shows a simplified flowchart for sharing game data; after a user of a client stops experiencing a game in accordance with the present invention, the method in accordance with an embodiment of the present invention is described specifically with reference to Figure 1 as follows.

Process 200∼Process 201: the client detects whether the network connection is normal, and the procedure continues with Step Process 202 if the network connection is normal; otherwise, game data of this game will be stored in a local game data storing unit and the procedure terminates.

In the case that the network connection between the client and a server is abnormal, the game data are stored in the game data storing unit of the client. For example, as a client, the mobile terminal may store locally the game data which may not be uploaded for the moment when there is no network signal, that is, the network connection is abnormal, and may upload the game data stored locally to the server when the client may access the network.

Process 202: the client judges whether a user needs to upload the game data, and the procedure continues with Process 203 if a user needs to upload the game data; otherwise, the game data of this game will be stored in a local game data storing unit and the procedure terminates.

In general, after a user of a client stops experiencing a game, the user may perform an interaction by a preset interface to decide whether to upload the game data of this game, and to further choose which categories of game data, such as process data, score data and prop data, are to be uploaded.

Process 203~Process 204: a game data processing unit of the client encapsulates the game data to be uploaded and sends the game data encapsulated to a game data receiving/sending unit of the server through a game data receiving/sending unit of the client, then the game data encapsulated is forwarded to a game data analyzing unit of the server by the game data receiving/sending unit of the server.

The game data receiving/sending unit of the client and the game data receiving/sending unit of the server adopt a uniform communication protocol. After encapsulating the game data chosen in Process 202 and setting different labels to different categories of game data, the game data processing unit of the client sends the game data with different labels to the server through the game data receiving/sending unit of the client and the game data receiving/sending unit of the server according to the preset protocol.

The data encapsulating technology and the network transferring technology are common technologies to those skilled in the art which may be implemented by using various existing methods and will not be described again herein.

Process 205: the game data processing unit of the server de-encapsulates and classifies the game data encapsulated and stores different categories of the game data in corresponding storing modules in the game data storing unit of the server through the different processing modules in the game data processing unit.

The game data analyzing unit of the server de-encapsulates the game data encapsulated according to the preset protocol, and after classifying the game data encapsulated according to the different labels, sends the game data to the different processing modules in the game data processing unit of the server; then the different processing modules store the game data in different local storing modules. The data de-encapsulating technology is a common technology to those skilled in the art which may be implemented by using various existing methods and will not be described again herein.

What is emphasized herein is that the server stores the game data received in the server locally under categories via the different processing modules so as to enable the game data to be downloaded by other clients. Furthermore, for processing modules for some categories of game data, corresponding processing may be performed to the game data stored; for example, after receiving score data, a score data processing module may perform a score list processing to all the score data stored, that is, sorting the scores in a descending order.

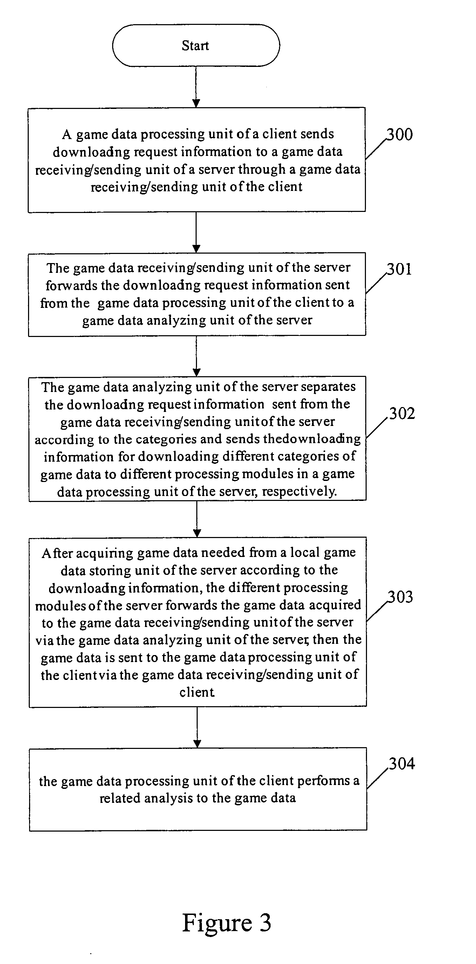

Thus, in accordance with the embodiment of the present invention, sharing game data is implemented and users of other clients may download game data in which they are interested from the game data shared in the server, respectively. Figure 3 shows a simplified flowchart for downloading shared game data by a client in accordance with another embodiment of the present invention and the procedure includes the following process specifically.

Process 300∼Process 301: a game data processing unit of a client sends downloading request information to a game data receiving/sending unit of a server through a game data receiving/sending unit of the client, then the game data receiving/sending unit of the server forwards the downloading request information sent from the game data receiving/sending unit of the client to a game data analyzing unit of the server.

In general, a user may perform a download procedure interaction through a preset interface. For example, the user may choose and download which categories of game data, such as process data, score data and prop data.

Process 302: the game data analyzing unit of the server separates the downloading request information sent from the game data receiving/sending unit of the server according to the categories and sends different downloading request information separated for downloading different categories of game data to different processing modules in a game data processing unit of the server, respectively.

The downloading request information may include only a label used for identifying a category of game data, such as a label identifying a score data, may also require to download score data of several preceding elements in a score list, and may also includes different labels used for identifying different categories of game data. The game data analyzing unit of the server separates the downloading request information according to the different labels and sends different downloading request information separated to the different processing modules in the local game data processing unit.

Process 303: after acquiring the game data needed from a local game data storing unit of the server according to the downloading request information, the different processing modules of the server forwards the game data acquired to the game data receiving/sending unit of the server via the game data analyzing unit of the server, then the game data is sent to the game data receiving/sending unit of the client via the game data receiving/sending unit of the client.

Process 304: the game data processing unit of the client performs a related analysis to the game data.

The game data processing unit of the client performs different processing according to different categories of the game data. For example, for score data, a user maybe needs only to require the server to download process data corresponding to a score in which the user is interested in a score list after acquiring the score data. For process data, the game data processing unit forwards the process data received to the game logic processing unit, then the game logic processing unit runs and reproduces a game process in the client according to the process data.

Furthermore, for the process data which is downloaded and sent to the game data processing unit of the client, a user may take a game process corresponding to the process data as a participant of a local game, that is, may make the game process join a local game started newly, by a preset interface. Thus, the user may play a match with the game process reproduced by the process data.

It is to be noted that a user may choose game data to be downloaded and download the game data to a client multiple times through a preset interface of the client, that is, the procedure shown in Figure3 may be performed repeatedly with multiple choices.

The foregoing are only preferred embodiments of the present invention and are not for use in limiting the present invention, any modification, equivalent replacement or improvement made under the spirit and principles of the present invention should be included in the protection scope of the present invention.

## Claims

1. A method for sharing game data, comprising:
generating, by a first client, game data, encapsulating the game data, and sending the game data encapsulated to a server after a user of the first client stops experiencing a game;
de-encapsulating, by the server, the game data sent from the first client, separating the game data de-encapsulated according to different categories, and storing the game data separated in the serve so that the game data can be downloaded by a second client.

2. The method of Claim 1, further comprising:
storing the game data generated locally and terminating the procedure if a user of the first client does not need to upload the game data after generating the game data and before encapsulating the game data.

3. The method of Claim 1 or 2, further comprising:
storing the game data generated by the first client locally and terminating the procedure if network connection is abnormal after generating the game data and before encapsulating the game data.

4. The method of Claim 2 or 3, further comprising: performing, by the first client, the procedure of encapsulating and sending the game data to a server if the user needs to upload the game data after storing the game data locally.

5. The method of Claim 1, further comprising:
choosing, by a user of the first client, the game data to be uploaded through a preset interface in the first client.

6. The method of Claim 1, wherein the game data stored in the server comprises:
at least one of process data, score data, prop data, and money data.

7. The method of Claim 1, wherein the process of downloading the game data comprises:
sending, by the second client, downloading request information to the server;
separating, by the server, the downloading request information sent from the second client according to different categories;
acquiring, by the server, the game data according to the different categories of the downloading request information and sending the game data acquired to the second client; processing, by the second client, the game data sent from the server.

8. The method of Claim 7, wherein the process of processing the game data sent from the server comprises:
reproducing game process according to the process data in the game data sent from the server.

9. The method of Claim 8, further comprising:
taking, by a user of the second client, the game process corresponding to the process data in the game data sent from the server as a participant of a local game through a preset interface in the second client.

10. A system for sharing game data, comprising: a client and a server, wherein:
the client comprises:
the game logic processing unit provides a game and generates game data after a user of the client stops experiencing a game;
the game data processing unit sends the game data generated by the game logic processing unit to the game data receiving/sending processing unit of the client after encapsulating the game data generated by the game logic processing unit, or sends the game data generated by the game logic processing unit to the data storing unit of the client;
the game data receiving/sending unit forwards the game data from the game data processing unit of the client to the game data receiving/sending unit of the server;
the game data storing unit stores temporarily the game data generated by the game logic processing unit;
the server comprises: a game data receiving/sending unit, a game data analyzing unit, a game data processing unit, and a game data storing unit;
the game data receiving/sending unit of the server forwards the game data from the game data receiving/sending unit of the client to the game data analyzing unit of the server;
the game data analyzing unit of the server sends different categories of game data to difference processing modules in the game data processing unit of the server after de-encapsulating and separating the game data from the game data receiving/sending unit of the server according to different categories;
the game data processing unit of the server, which comprises different processing modules for processing different categories of game data, stores the corresponding different categories of game data from the game data analyzing unit of the server in the game data storing unit of the server;
the game data storing unit of the server stores the game data uploaded by a client.

11. The system of Claim 10, wherein the different processing modules of the game data processing unit of the server comprise: at least one of a score data processing module, a prop data processing module, and a money data processing module.

12. The system of Claim 10, wherein the game data storing unit of the server comprises different storing modules for storing different categories of game data;
the different storing modules comprise: at least one of a process data storing module, a score data storing module, a prop data storing module, and a money data storing module.

13. The system of Claim 10, wherein:
the game logic processing unit of the client also receives process data in the game data from the game data processing unit of the client and reproduces game process corresponding to the process data;
the game data processing unit of the client also sends downloading request information for downloading game data stored in the server to the game data analyzing unit of the server through the game data receiving/sending unit of the client and the game data receiving/sending unit of the server, and receives game data from the game data receiving/sending unit of the client;
the game data receiving/sending unit of the client also receives game data from the game data receiving/sending unit of the server and forwards the game data to the game data processing unit of the client;
the game data receiving/sending unit of the server also receives game data from the game data analyzing unit of the server and forwards the game data to the game data receiving/sending unit of the client;
after receiving downloading request information from the game data receiving/sending unit of the server and separating the information, the game data analyzing unit of the server sends different categories of the downloading request information to the different processing modules in the game data processing unit; receives game data from the different processing modules in the game data processing unit and sends the game data to the game data receiving/sending unit of the server after encapsulating the game data;
the different processing modules of the game data processing unit also receive the downloading request information from the game data receiving/sending unit of the server, acquire the game data from the storing unit according to the downloading request information, and then send the game data acquired to the game data analyzing unit of the server.
